(19) **Europäisches Patentamt**

**European Patent Office**

**Office européen des brevets**

(11) **EP 1 026 520 B1**

(12) **EUROPEAN PATENT SPECIFICATION**

(45) Date of publication and mention
of the grant of the patent:
**29.09.2004 Bulletin 2004/40**

(51) Int Cl.⁷: **G01S 13/88**, G01S 13/87

(21) Application number: **00101724.3**

(22) Date of filing: **27.01.2000**

(54) **Method and radar system for scanning a space in order to detect an object therein**

Verfahren und Radarsystem zur Detektion eines Objektes mittels Abtastung eines Raums

Procédé et système radar de balayage d'un espace pour y détecter un objet

(84) Designated Contracting States:
**DE FR GB IT SE**

(30) Priority: **27.01.1999 DE 19903081**

(43) Date of publication of application:
**09.08.2000 Bulletin 2000/32**

(73) Proprietor: **Delphi Technologies, Inc.
Troy, MI 48007 (US)**

(72) Inventor: **Ghosh, Sharmila
55128 Mainz (DE)**

(74) Representative: **COHAUSZ & FLORACK
Patent- und Rechtsanwälte
Bleichstrasse 14
40211 Düsseldorf (DE)**

(56) References cited:
**WO-A-96/07932          WO-A-97/14058
GB-A- 1 234 764        US-A- 5 148 175
US-A- 5 510 800**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to methods for scanning a space, in particular the interior of a vehicle, in order to recognise an object therein, comprising the steps of transmitting a radar signal into the space, receiving a signal at a first location at a first receiving time T1 after transmission and at a second location at a second receiving time T2 = T1 + $\delta$t2 wherein $\delta$t2 is a predetermined delay time interval, and evaluating reflections traced back to said radar signal in the received signal under consideration of the different receiving times in order to recognise an object and to determine its location in the space.

The invention further relates to a radar system for carrying out these methods.

Prior art document WO 97/14058 A discloses an apparatus and a method for determining positional information of an object, comprising means for transmitting a probe signal towards the object, means for receiving, at a plurality of spaced apart locations, the probe signal as returned by the object, and detecting means, coupled to the receiving means, for detecting the relative timing of the returned probe signals as received at the plurality of locations, whereby the positional information for the object can be determined from said relative timing. Three aspects are disclosed, termed the "differential delay aspect", the "common pulse generator aspect" and the "multiple pulse in flight aspect". According to the "differential delay aspect" and the "common pulse generator aspect", it is particularly proposed to granularly determine the reception time difference of signals that have been received in range gates of different receivers, e.g. by correlation of received signals.

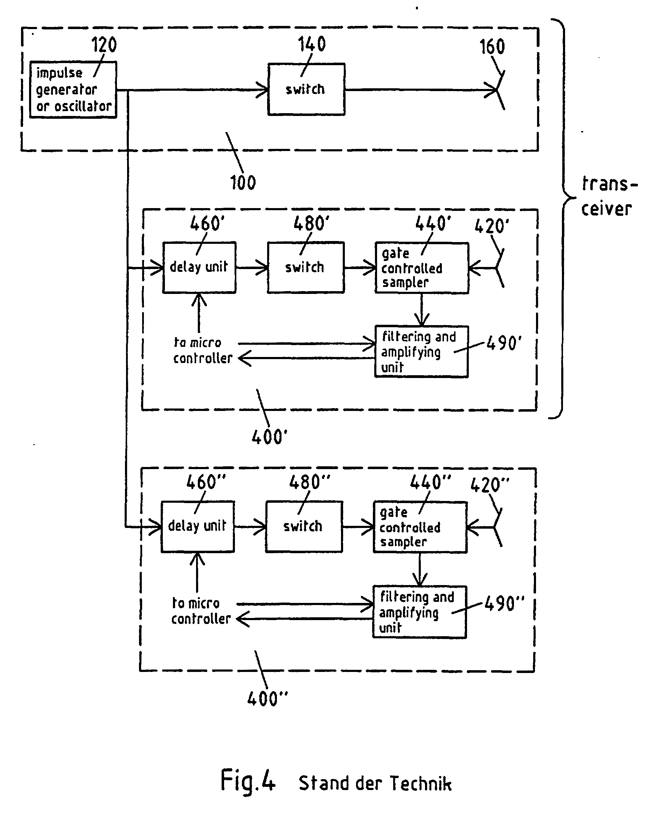

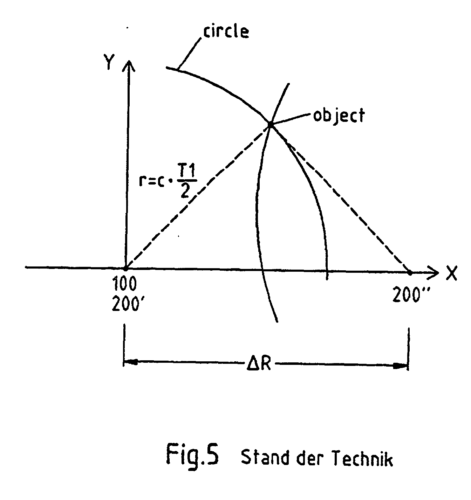

In the following a radarsystem and a method known in the art is illustrated by referring to Fig. 4 and 5.

The radar system according to Fig. 4 comprises a transmitter 100, two receivers 400', 400" and a micro controller not shown.

The transmitter 100 comprises a pulse generator or an oscillator 120, the output of which is connected to a switch 140. The output of the switch is connected to a transmitting antenna 160.

The receiver 400' comprises a receiving antenna 420' the output of which is connected to a gate controlled sampler or mixer 440'. The receiver 400' further comprises a delay unit 460' the input of which is connected to the output of said pulse generator 120 of said transmitter 100. The output of said delay unit 460' is connected to a switch 480' the output of which is connected to said gate controlled sampler 440'. The output of said sampler 440' is connected to a filtering and amplifying unit 490' the output of which is connected to a micro controller.

In the following the operation of the radar system is explained by referring to Fig. 4.

The pulse generator 120 generates pulses or pulse sequences which trigger the switch 140. Said switch shortens the width of the pulses before they are transmitted via the transmitting antenna 160 in order to save energy. If the oszillator is provided instead of the pulse generator another formed high frequency signal is transmitted via said antenna.

The receiver 400' is used for receiving a receiving signal via its receiving antenna 420' and to evaluate reflections traced back to said radar signal in the received signal in order to recognise an object in the space and to determine its location. In order to fulfil that task the receiving signal received by said receiving antenna 420' is forwarded to the gate controlled sampler 440'. Said sampler is activated in response to a signal output by said switch 480', which is triggered by an output signal of said delay unit 460'. The delay unit generates its output signal a predetermined delay time T1 after a pulse has been generated by said pulse generator or oscillator 120 of said transmitter 100.

If the transmitted radar signal is not a pulse sequence but another high frequency signal generated by the oszillator in the transmitter the gate of the sampler in the receiver is controlled by a range swept outputsignal of the switch.

If said sampler 440' is activated it provides an integration process over a plurality of received pulses. An calculated integration signal is output to said filtering and amplifying unit 490' which provides a low path filtering process to the received integration signal in order eliminate undesired noise components and in order to generate an amplified envelope signal. Said envelope signal is output via an analogue to digital converter (not shown) to the micro controller (not shown too). The micro controller evaluates the received envelope signal under consideration of its receiving time T1 in order to recognise an object in the space and to determine its position. The micro controller further controls said filtering an amplifying unit in order to achieve optimal filtered and amplified envelope signals. The micro controller further adjusts the delay time of said delay unit 460'.

In the radar system said transmitter 100 and said receiver 400' may be co-located in one transceiver device.

For enabling a more precise determination of the position of an object the radar system further comprises the second receiver 400" the hardware of which is identical to the hardware of the first receiver 400'.

There is only one difference in the operation of said receivers, namely that the respective delay units are adjusted to different delay times with the result that the sampler of the first receiver 400' receives the receiving signal at a first receiving time T1 and the sampler of the second receiver 400" receives the receiving signal at a second receiving time T2 > T1.

The scanning of the space by operating the radar system is now explained by referring to the illustration shown in Fig. 5.

Fig. 5 shows a co-ordinate system in the space wherein the transceiver comprising a transmitter 100 and the first receiver 400' is located in the origin. The second receiver 400" is located at a distance of ΔR to the origin. By transmitting the radar signal and evaluating a receiving signal which may comprise reflections traced back to said radar signal at a time T1 after transmission, a circular shell in the space is scanned.

The shell is determined by a constant radius of r = C x T1/2 around the centre of the co-ordinate system which corresponds to the location of the transceiver wherein C represents the speed of the light. If there are reflections detected within the signal received at the time T1 it can be concluded that there is an object in the space which has caused said reflections and which has a distance of the radius r of the shell to the origin of the co-ordinate system. This is in particular true when assuming that there is no other disturbance.

In order to more precisely determine the position of the object in the space, preferably in order to determine a second co-ordinate besides the radius r, the second receiver 400" is used. If the physical separation ΔR between the first and the second receiver 400', 400" fulfils the condition that ΔR > c x δt wherein c represents the speed of the light, the locations of all points with a receiving delay difference of T2 - T1 between the two receivers is a hyperbola. The provided condition ensures that the circular shell and the hyperbola have at least one intersection the co-ordinates of which represent the position of the detected object in the space.

The microcontroller compares the information of the receivers and calculates the position from the measured radii.

From the prior art it is further known to provide one transceiver receiving a transmitted signal at a time T1 and several receivers being arranged at different locations in the space. The receivers are activated at different individual predetermined delay times with respect to T1 in order to determine the two- or more-dimensional position of the object in the space.

Starting from that prior art it is the object of the invention to improve methods and a radar system for scanning a space in the way that the position of an object detected in the space is determined more precisely.

According to claim 1 the object is solved in the way that the reception of the signal at the second location is repeated after T2 for a predetermined number of k-2 times Tk = Tk-1 + δtk with k ≥ 3 wherein δtk represents predetermined delay time intervals.

In difference to the prior art the second receiver is activated not only once but additionally for a predetermined number of k-2 times after T2. In this way, that means by keeping T1 fixed and stepwise increasing Tk different points on the circular shell can be scanned if the condition ΔR > C x δt2 is fulfilled. Expressed in other words, the position of an object on the shell can be determined with an arbitrary high resolution if just the predetermined number k-2 is chosen high enough and if the predetermined delay time intervals δtk are chosen small enough.

According to the above formula measurement or calculation for Tk is started from TK-1 and not from the time when the radar signal is transmitted, respectively. In that way δtk and TK can be determined more precisely with the result that the location of the object in the space can be determined more precisely too.

According to a first embodiment of the invention it does make sense to vary the receiving time T1 after the predetermined number of k-2 signals have been received at the second location and before the method is repeated again. By changing T1 the whole half of the space defined by the location of the transceiver 100', 200' and the second receiver 400' can be mapped.

The object of the invention is further achieved in the way that the reception of the signal is done at n - 2 different locations n at times Tn = Tn-1 + δtn with n ≥ 3, respectively wherein δtn represents a delay time interval with respect to Tn-1.

That alternative method provides the advantage that - according to the arrangement of the locations - the whole space or a whole plane gets mapped by only transmitted pulse.

It is advantageous to start measurement or calculation for Tn from Tn-1 and not from the time when the radar signal is transmitted, respectively. In that way δtn and Tn can be determined more precisely with the result that the location of the object in the space can be determined more precisely too.

It does make sense if the delay time intervals δtn-1 and 6tn are equal for all n > 3 since in that case calculation and evaluation of the received signal is facilitated.

For specific applications it might be helpful if the delay time interval is variable, since then the resolution of specific areas in the space can be changed with respect to requirements of specific applications.

The object is further solved by a radar system carrying out one of the methods discussed above. The advantages of said radar system correspond to the provided advantages of the methods.

It is advantageous if the transmitter and the first receiver are co-located and form a transceiver since in that case the area scanned in the space is a circular shell around said transceiver wherein the radius of the circular shell can easily be calculated.

It is further advantageous that a transmitter of the radar system comprises a switch for transforming pulses provided by a pulse generator of said transmitter into pulses having a smaller width before they are transmitted via the antenna. By reducing the width of the pulses to be transmitted, energy is saved.

In the claimed radar system each of n receivers comprises a variable delay unit for triggering the reception of the receiving signal with respect to the time of transmission of a radar signal by the transmitter or with respect to the time of reception of the receiving signal at a previously activated receiver. The possibility to variably adjust the delay time of the delay unit enables the radar system to be very flexibly adjusted to different application requirements, in particular to requirements according to the precision for determining the position of the object in the space.

Finally, locating the receivers of the radar system on rectangular co-ordinate axes of a co-ordinate system in the space is advantageous for mapping different co-ordinate planes the space or the whole space.

There are five figures accompanying to the present description wherein

Fig. 1 shows a first embodiment of the radar system according to the present invention,

Fig. 2a shows a diagram for illustrating the operation of the radar system according to the first embodiment when varying a parameter $\delta t$,

Fig. 2b shows a diagram for illustrating the operation of the radar system according to the first embodiment when varying parameters $\delta t$ and T1,

Fig. 3 shows a second embodiment of the radar system according to the present invention,

Fig. 4 shows a radar system according to prior art and

Fig. 5 shows a diagram illustrating the operation of the radar system according to Fig. 4.

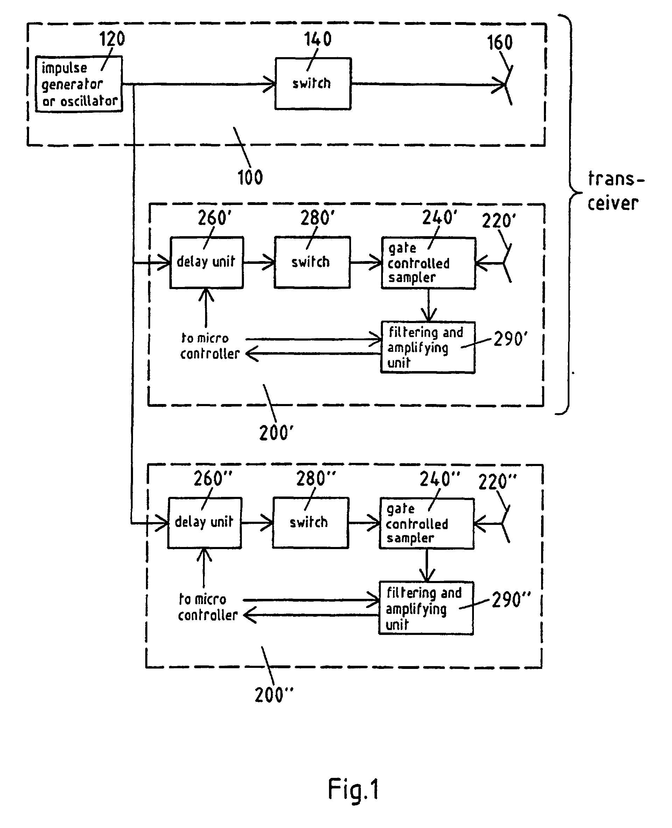

In the following advantageous embodiments of the present invention are described by referring by Figs. 1 to 3.

Fig. 1 shows a first embodiment of the radar system according to the present invention. Its hardware structure is identical to the hardware structure known from the prior art. Thus, components 100 to 160, 200' to 290' and 200" to 290" in Fig. 1 correspond to components 100 to 160, 400' to 490' and 400" to 490" in Fig. 4, respectively. Moreover, the operation of the transceiver 100, 200' of the present invention corresponds to the operation of the transceiver 100, 400' of the prior art.

However, the radar system known in the art and the radar system according the first embodiment of the invention differ in the operation of their second receivers 400" and 200".

The second receiver 200" according to the first embodiment of the invention which is located at a second location, does not only evaluate a receiving signal at the second receiving time $T2 = T1 + \delta t2$, wherein $\delta t2$ is a predetermined delay time interval, but further receives and evaluates the receiving signal for a predetermined number k-2 of times $Tk = Tk-1 + \delta tk$, wherein $\delta tk$ represents different delay time intervals.

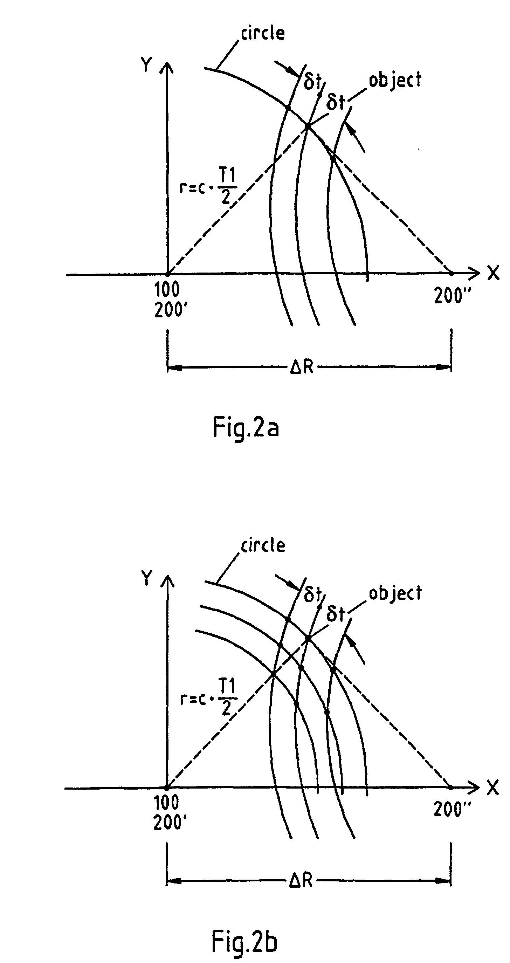

The advantage of such an operation of the second receiver 200" is illustrated in Figs. 2a and 2b.

Fig. 2a substantially corresponds to Fig. 5 with the only difference that there is not only one but a plurality of hyperbolas shown. As mentioned above, each hyperbola represents the locations of all points having a receiving delay difference of $\delta tk$ between the first and the second receiver 200' and 200". The different hyperbolas represent different delay time intervals $\delta tk$ with respect to T2. Consequently, the intersections between the circle of the radius $r = C \times T1/2$ and a hyperbola represents the location of an object which satisfies both, the total return time T1 for the transceiver and additionally a specific delay time $\delta tk$ between the reception of a transmitted radar impulse by the transceiver and the second receiver 200". Expressed in other words, by receiving the receiving signal at the second location at a plurality of times Tk and keeping T1 fixed different points on the circle can be scanned. That method operates under the condition that $\delta tk$ is less than $\Delta R/C$, wherein $\Delta R$ represents the distance between the transceiver and the second receiver.

The delay time interval $\delta tk$ can be varied or can be kept fixed. By varying the value of $\delta tk$ the distance between two successive hyperbolas is varied and in that way the distance between two scanning points in the space can be varied.

Fig. 2b illustrates another modus of operation which differs from the one illustrated in Fig. 2a in the way that additionally the first receiving time T1 at which reflections of the rate of the transmitted radar signal are expected in the receiving signal is changed. As shown in Fig. 2b a variation of the receiving time T1 lets to a plurality of circles, e.g. shells, having different radii according to the different receiving times T1.

Combining a variations of $\delta tk$ and of T1 the whole half plane of the space defined by the location of the transceiver and the second receiver can be mapped.

Equally to the method shown in Fig. 2 for scanning the X-Y-plane, the Y-Z or the X-Z-plane can be mapped by appropriately arranging the transceiver and the second receiver.

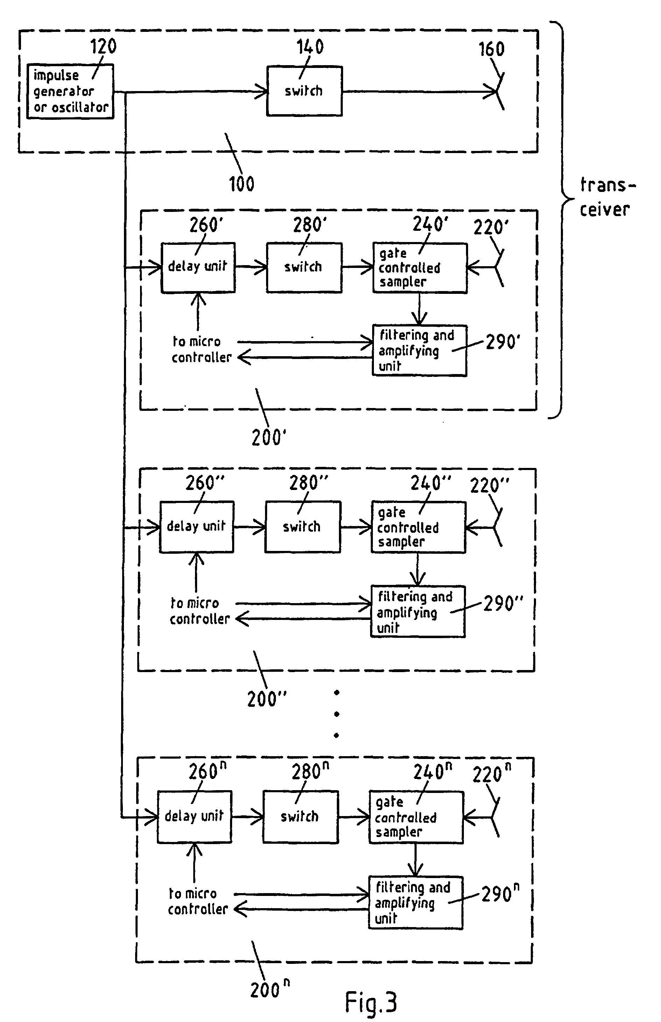

A second embodiment of the invention is shown in Fig. 3. It differs from the first embodiment in that there is not only one second receiver 200" provided additionally to the transceiver but several receivers $200^n$.

After transmission of a radar signal by the transceiver and reception of a reflected signal at the transceiver at a first receiving time T1 after transmission the reflected signal is further received at the other receivers at times $Tn = Tn-1 + \delta tn$, respectively. $\delta tn$ represents a delay time interval with respect to Tn-1 the time when the signal is received at receiver n-1.

In an equal manner with respect to the first embodiment a variation of T1 or $\delta tn$ enables a scanning of the space with a desired density or resolution.

Moreover, since there is not only one but n-1 receivers except the receiver in the transceiver provided, they can be arranged on the co-ordinate axes of a three dimensional space, in that the whole space can be scanned. Evaluation of the receiving signals is done under consideration of the delay time intervals $\delta tn$ which represents the delay time between two signals received at receivers n-1 and n.

In the two provided embodiments of the radar system not the absolute time, but the relative time difference between two successively activated receivers is measured and determined. Hence, the tolerance of the systems is a lot smaller than in conventional systems. The claimed systems avoid large uncertainties in values for $\delta tk$ and $\delta tn$ arising from the evaluation of the difference between Tk or Tn and Tk-1 or Tn-1, respectively, as done in the prior art, by the directly setting the delay time differences $\delta tk$ and $\delta tn$ between two successively activated receivers. Since $\delta tk$ and $\delta tn$ can be determined more precisely a similar close tolerance in the position determination is achieved.

In both embodiments the receiving times Tn or Tk may also be calculated as Tn' or Tk', respectively on the basis of the following formula:

$$Tk' = T1 + \delta tk'$$

$$Tn' = T1 + \delta tn',$$

wherein $\delta tk'$ or $\delta tn'$ is stepwise increased or varied for each increasing of k or n, respectively.

## Claims

1. Method for scanning a space, in particular the interior of a vehicle, in order to detect an object therein, comprising the steps of:

   transmitting a radar signal into the space,

   receiving a signal at a first location at a first receiving time T1 after transmission and at a second location at a second receiving time T2 = T1 + $\delta t2$, wherein T2 is delayed for the delay time interval $\delta t2$ with respect to T1 and wherein the distance $\Delta R$ between the first and the second location fulfils the condition that $\Delta R > C \times \delta t2$, wherein C represents the speed of light,

   evaluating reflections traced back to said radar signal in the received signal under consideration of the different locations and receiving times in order to detect the object and to determine its location in the space,

   activating the reception of the signal at the second location after T2 for a predetermined number of k-2 times Tk = Tk-1 + $\delta tk$ with k ≥ 3, wherein $\delta tk$ represents a delay time interval with respect to Tk-1.

2. Method according to claim 1, **characterized in that** T1 is varied or remained unchanged after the predetermined number of k-2 signals have been received at the second location and before the method is repeated again.

3. Method for scanning a space, in particular the interior of a vehicle, in order to detect an object therein, comprising the steps of:

   transmitting a radar signal into the space,

   receiving a signal at a first location at a first receiving time T1 after transmission and at a second location at a second receiving time T2=T1+$\delta t2$, wherein T2 is delayed for the delay time interval $\delta t2$ with respect to T1, and wherein the distance $\Delta R$ between the first and the second location fulfils the condition that $\Delta R > C \times \delta t2$, wherein C represents the speed of light,

   evaluating reflections traced back to said radar signal in the received signal under consideration of the different locations and receiving times in order to detect the object and to determine its location in the space, and

   activating the reception of the signal at n-2 with n≥3 further locations 3...n at times Tn= Tn-1 + $\delta tn$, respectively, wherein $\delta tn$ represents a delay time interval with respect to Tn-1.

4. Method according to claim 3, **characterized in that** $\delta tn-1 = \delta tn$ for all n≥3.

5. Method according to claim 4, **characterized in that** $\delta tn$ is variable for all n ≥ 3, respectively.

6. Radar system carrying out one of the methods according to claims 1 to 5, comprising:

   a transmitter transmitting the radar signal into the space,

   n receivers receiving the signal at the n different locations of the receivers at different times according to the methods, and

   an evaluating unit evaluating reflections traced back to said radar signal under consideration of the different locations and receiving times in order to detect an object and to determine its location in the space.

**7.** Radar system according to claim 6, **characterized in that** the transmitter and the first (n=1) receiver are co-located and form a transceiver.

**8.** Radar system according to claims 6 or 7, **characterized in that** the transmitter comprises a switch transforming pulses provided by a puls generator before they are transmitted via an antenna into pulses having a smaller width, respectively.

**9.** Radar system according to one of claims 6 to 8, **characterized in that** each of said n receivers comprises a variable delay unit triggering the reception of the receiving signal with respect to the time of transmission of the radar signal by the transmitter or with respect to the time of reception of the receiving signal at a previously activated receiver.

**10.** Radar system according to one of claims 6 to 9, **characterized in that** the receivers are located on rectangular co-ordinate axis of a co-ordinate system in the space, respectively.

**Patentansprüche**

**1.** Verfahren zum Scannen eines Raums, insbesondere des Inneren eines Fahrzeugs, zum Erkennen eines Objekts darin, umfassend die Schritte des Sendens eines Radarsignals in den Raum, Empfangens eines Signals an einer ersten Position zu einer ersten Empfangszeit T1 nach der Sendung und an einer zweiten Position zu einer zweiten Empfangszeit T2 = T1 + $\delta t2$, wobei T2 für den Verzögerungszeitintervall $\delta t2$ bezüglich T1 verzögert ist und wobei der Abstand $\Delta R$ zwischen der ersten und zweiten Position die Bedingung erfüllt, daß $\Delta R$ > c x $\delta t$ ist, wobei c die Lichtgeschwindigkeit repräsentiert, Auswertens von Reflexionen, die in dem empfangenen Signal auf das Radarsignal zurückverfolgt sind, unter Berücksichtigung der verschiedenen Positionen und Empfangszeiten zum Erkennen des Objekts und zum Bestimmen seiner Lage in dem Raum, Aktivierens des Empfangs des Signals an der zweiten Position nach T2 für eine vorbestimmte Anzahl von k - 2 mal Tk = Tk - 1 + $\delta tk$ mit k $\geq$ 3, wobei $\delta tk$ einen Verzögerungszeitintervall bezüglich Tk - 1 repräsentiert.

**2.** Verfahren nach Anspruch 1, **dadurch gekennzeichnet, daß** T1 variiert wird oder unverändert bleibt, nachdem die vorbestimmte Anzahl von k - 2 Signalen an der zweiten Position empfangen wurde und bevor das Verfahren wiederholt wird.

**3.** Verfahren zum Scannen eines Raums, insbesondere des Inneren eines Fahrzeugs, zum Erkennen eines Objekts darin, umfassend die Schritte des Sendens eines Radarsignals in den Raum, Empfangens eines Signals an einer ersten Position zu einer ersten Empfangszeit T1 nach der Sendung und an einer zweiten Position zu einer zweiten Empfangszeit T2 = T1 + $\delta t2$, wobei T2 für den Verzögerungszeitintervall $\delta t2$ bezüglich T1 verzögert ist und wobei der Abstand $\Delta R$ zwischen der ersten und zweiten Position die Bedingung erfüllt, daß $\Delta R$ > c x $\delta t$ ist, wobei c die Lichtgeschwindigkeit repräsentiert, Auswertens von Reflexionen, die in dem empfangenen Signal auf das Radarsignal zurückverfolgt sind, unter Berücksichtigung der verschiedenen Positionen und Empfangszeiten zum Erkennen des Objekts und zum Bestimmen seiner Lage in dem Raum, Aktivierens des Empfangs des Signals bei n - 2, wobei n = 3 ist, weiteren Positionen 3...n jeweils zu Zeiten Tn = Tn - 1 + $\delta tn$, wobei $\delta tk$ einen Verzögerungszeitintervall bezüglich Tn - 1 repräsentiert.

**4.** Verfahren nach Anspruch 3, **dadurch gekennzeichnet, daß** $\delta tn$ - 1 = $\delta tn$ für alle n $\geq$ 3 ist.

**5.** Verfahren nach Anspruch 4, **dadurch gekennzeichnet, daß** $\delta tn$ für alle n $\geq$ 3 jeweils variabel ist.

**6.** Radarsystem, das eines der Verfahren nach Anspruch 1 bis 5 ausführt, umfassend:

einen Sender, der das Radarsystem in den Raum sendet,

n Empfänger, die das Signal an den n verschiedenen Positionen der Empfänger zu verschiedenen Zeiten gemäß den Verfahren empfangen, und

eine Auswertungseinheit, die Reflexionen, die auf das Radarsignal zurückverfolgt sind, unter Berücksichtigung der verschiedenen Positionen und Empfangszeiten zum Erkennen eines Objekts und zum Bestimmen seiner Lage in dem Raum auswertet.

**7.** Radarsystem nach Anspruch 6, **dadurch gekennzeichnet, daß** der Sender und der erste (n = 1) Empfänger zusammengelegt sind und einen Transceiver ausbilden.

**8.** Radarsystem nach einem der Ansprüche 6 oder 7, **dadurch gekennzeichnet, daß** der Sender ein Schaltgerät umfaßt, das Impulse, die von einem Impulsgeber des Senders vorgesehen sind, vor der Sendung über eine Antenne in Impulse mit jeweils einer geringeren Breite umwandelt.

**9.** Radarsystem nach einem der Ansprüche 6 bis 8, **dadurch gekennzeichnet, daß** jeder der n Empfänger eine variable Verzögerungseinheit umfaßt, die den Empfang des Empfangssignals bezüglich der Sendezeit des Radarsignals durch den Sender oder bezüglich der Empfangszeit des Empfangssignals an einem vorher aktivierten Empfänger ansteuert.

**10.** Radarsystem nach einem der Ansprüche 6 bis 9, **dadurch gekennzeichnet, daß** die Empfänger jeweils auf rechtwinkligen Koordinatenachsen eines Koordinatensystems in dem Raum angeordnet sind.

## Revendications

**1.** Procédé de balayage d'un espace, en particulier l'intérieur d'un véhicule, afin d'y détecter un objet, comprenant les étapes consistant à :

émettre un signal radar dans l'espace,

recevoir un signal en un premier emplacement à un premier instant de réception T1 après une émission et en un second emplacement à un second instant de réception $T2 = T1 + \delta t2$, où T2 est retardé de l'intervalle de temps de retard $\delta t2$ par rapport à T1 et où la distance $\Delta R$ entre le premier emplacement et le second emplacement satisfait à la condition $\Delta R > C \times \delta t2$, où C représente la vitesse de la lumière,

évaluer les réflexions renvoyées vers ledit signal radar dans le signal reçu en prenant en considération les différents emplacements et les temps de réception afin de détecter l'objet et de déterminer son emplacement dans l'espace, et à

activer la réception du signal au niveau du second emplacement après T2 pour un nombre prédéterminé de k - 2 fois $Tk = Tk-1 + \delta tk$ avec $k \geq 3$, où $\delta tk$ représente un intervalle de temps de retard par rapport à Tk-1.

**2.** Procédé selon la revendication 1, **caractérisé en ce que** T1 est modifié ou laissé inchangé après que le nombre prédéterminé de k - 2 signaux ait été reçu au niveau du second emplacement et avant que le procédé soit répété de nouveau.

**3.** Procédé pour balayer un espace, en particulier l'intérieur d'un véhicule, afin d'y détecter un objet, comprenant les étapes consistant à :

émettre un signal radar dans l'espace,

recevoir un signal en un premier emplacement à un premier instant de réception T1 après une émission et en un second emplacement à un second instant de réception $T2 = T1 + \delta t2$, où T2 est retardé de l'intervalle de temps de retard $\delta t2$ par rapport à T1 et où la distance $\Delta R$ entre le premier emplacement et le second emplacement satisfait à la condition $\Delta R > C \times \delta t2$, où C représente la vitesse de la lumière,

évaluer les réflexions renvoyées vers ledit signal radar dans le signal reçu en prenant en considération les différents emplacements et les temps de réception afin de détecter l'objet et de déterminer son emplacement dans l'espace, et à

activer la réception du signal en n - 2 autres emplacements 3 ... n, avec $n \geq 3$, aux instants $Tn = Tn-1 + \delta tn$, respectivement, où $\delta tn$ représente un intervalle de temps de retard par rapport à Tn-1.

**4.** Procédé selon la revendication 3, **caractérisé en ce que** $\delta tn-1 = \delta tn$ pour tout $n \geq 3$.

**5.** Procédé selon la revendication 4, **caractérisé en ce que** $\delta tn$ est variable pour tout $n \geq 3$, respectivement.

**6.** Système radar mettant en oeuvre l'un des procédés selon l'une quelconque des revendications 1 à 5, comprenant :

un émetteur émettant le signal radar dans l'espace,

n récepteurs recevant le signal au niveau des n emplacements différents des récepteurs à des instants différents selon les procédés, et

une unité d'évaluation évaluant les réflexions renvoyées vers ledit signal radar en prenant en considération les différents emplacements et les temps de réception afin de détecter un objet et de déterminer son emplacement dans l'espace,

**7.** Système radar selon la revendication 6, **caractérisé en ce que** l'émetteur et le premier récepteur (n = 1) sont situés ensemble et forment un émetteur récepteur.

**8.** Système radar selon l'une quelconque des revendications 6 ou 7, **caractérisé en ce que** l'émetteur comprend un commutateur transformant les impulsions fournies par un générateur d'impulsions avant qu'elles ne soient émises par l'intermédiaire d'une antenne en impulsions ayant une largeur plus petite, respectivement.

9.  Système radar selon l'une quelconque des revendications 6 à 8, **caractérisé en ce que** chacun desdits n récepteurs comprend une unité de retard variable déclenchant la réception du signal de réception par rapport à l'instant d'émission du signal radar par l'émetteur ou par rapport à l'instant de réception du signal de réception au niveau d'un récepteur activé précédemment.

10. Système radar selon l'une quelconque des revendications 6 à 9, **caractérisé en ce que** les récepteurs sont situés sur un axe de coordonnées rectangulaires d'un système de coordonnées dans l'espace, respectivement.

Fig.1

Fig.2a

Fig.2b

Fig.3

Fig.4 Stand der Technik

Fig.5 Stand der Technik